# EUROPEAN PATENT SPECIFICATION

(11) **EP 3 642 104 B1**
(45) Date of publication and mention of the grant of the patent: **06.08.2025**
(21) Application number: 18820202.2
(22) Date of filing: 19.06.2018
(51) Int. Cl.: B62M 23/02, B60K 6/48, B62K 11/04, B62M 9/06, B62M 7/12, B62M 7/02

(54) **DRIVE SYSTEM FOR A TWO-WHEELED VEHICLE**
ANTRIEBSSYSTEM FÜR EIN ZWEIRADFAHRZEUG
SYSTÈME D'ENTRAÎNEMENT POUR VÉHICULE À DEUX ROUES

(30) Priority: 20.06.2017 IN 201741021552
(43) Date of publication of application: 29.04.2020
(73) Proprietor: TVS Motor Company Limited, Chennai 600006 (IN)
(72) Inventor: MEIBALAN, Mugilan, Chennai 600 006 (IN); SUBRAMONIAM, Chithambaram, Chennai 600 006 (IN)
(74) Representative: Patentanwaltskanzlei Matschnig & Forsthuber OG
(86) International application number: PCT/IB2018/054498
(87) International publication number: WO 2018/234985

(56) References cited:
- EP-A1- 2 502 816
- WO-A1-2015/079426
- WO-A2-2009/113104
- TW-U- M 504 769
- US-A1- 2002 148 665
- US-A1- 2005 067 201
- US-A1- 2008 023 239
- US-A1- 2009 223 730
- US-A1- 2012 325 571
- US-B1- 7 225 892
- US-B2- 9 616 883

## Description

### TECHNICAL FIELD

The present subject matter relates to a hybrid saddle type two and three wheeled vehicle. More particularly, the present subject matter relates to a drive system for the hybrid saddle type vehicle.

### BACKGROUND

In recent times there is an increased demand to control emissions from automobiles, in view of stringent emission norms. As a result, a number of hybrid and electric vehicles are seeing the light of the day in order to minimize the amount of emissions. For example, a typical hybrid vehicles configured to be powered either by an internal combustion engine or electric motor or both, are replacing normal engine powered vehicles.

Particularly, said hybrid vehicles, especially of the parallel type include a drive system for transmitting power from the engine to a rear wheel, while the engine is operating in different operating modes such as sole engine mode, hybrid power mode or hybrid economy mode. However, when the motor alone operates, it directly drives the rear wheel without involving any power transmission system.

In an existing hybrid saddle type vehicle, a drive power transmission mechanism typically includes a single speed transmission for transferring power from an internal combustion engine to a rear wheel of the vehicle. Particularly, the single speed transmission includes the engine speed (i.e., engine revolutions per minute (RPM)) which typically adjusts proportionately with the vehicle speed. For example, as the vehicle accelerates, the engine RPM increases. Thus, causing insufficient initial acceleration of the vehicle.

Therefore, in order to deliver large amount of torque and power to the rear wheel and further to provide improved initial acceleration for the vehicle at engine low speed, several attempts have been made to replace the conventional single speed transmission with a variable V-belt type continuous variable transmission (CVT). In an existing hybrid saddle type vehicle, the continous variable transmission (CVT) permits the engine to be set at an optimum rotational speed for horsepower, torque, and fuel efficiency while the gear ratio in the transmission is varied to control the vehicle speed. Such type of transmission system brings along with it the aforementioned disadvantages. To overcome such challenges, implementing independent transmission system layout for the engine and the motor can lead to high cost, weight as well as undesirable space requirement in the vehicle. Furthermore, the dynamic handling performance of the vehicle can also deteriorate. It is apparent need to have disposition of the powertrains as close as feasible to the centre of gravity (CG) of the vehicle to achieve good handling performance as well as achieve compact packaging.
In the prior art (US 7225892 B1), a compact vehicle construction with a CVT is achieved where the CVT does not contribute significantly to the unsprung weight of the vehicle. The CVT has multiple transmission stages wherein a drive pulley is connected to an output shaft, which is further connected to a driven pulley via a belt and said driven pulley is connected to an output shaft which is further connected to a gear box over a sprocket and said sprocket transfers motive power from gear box to rear wheel via a chain and further comprises a centrifugal clutch connected between the driven pulley and the drive pulley via a sheave. However, such a design leads to plurality of parts and if the weight of the parts are not balanced on both sides of the vehicle, it leads to loss of transmission of power to the rear wheel of the vehicle. Hence, an improved design of CVT is required.

**In** a typical saddle type vehicle, example with a hub mounted electric motor as one power train and an internal combustion engine as another one mounted on to the swing arm of the vehicle at the rear, there exists another challenge of achieving a layout configuration which is accommodated within the distance between the rear wheel axle and the swing arm pivot. An increase in this leads to increase in wheelbase of the vehicle which can be detrimental to the handling and maneuverability of the vehicle. Furthermore, any lateral space is also restricted by factors including a vehicle width, ergonomic considerations of width fouling with users legs etc. Thus, there is a need for a lateral cum longitudinal compact layout of the power train for a hybrid type saddle vehicle which can also facilitate ease of change over of the vehicle from an electric vehicle power train type to a hybrid type with minimum effort and impact.

However, very few continuous variable transmission (CVT) arrangements in hybrid saddle type vehicles have proven successful. For example, in conversion of a typical hybrid two-wheeled vehicle to a pure electric vehicle, when the motor alone operates, the engine from the vehicle requires to be disassembled. However, the step of dissembling the engine from the vehicle is a complex and time consuming process. Thus, there arises a need from the fact that the vehicle manufacturer needs to have a flexible platform to manufacturer different variety of products including an electric vehicle (EV) alone, HEV etc. on a single production set-up at minimum cost, change over time, ease of logistics, training of labour etc. Also the end user of the vehicle can have the option of retrofitting the vehicle with a single powertrain platform or go for a multi-power train platform based on user requirement at minimum cost, downtime & impact on the performance of the vehicle.

Therefore, it is desirable to provide an improved layout configuration for a continuous variable transmission (CVT) for implementation in a vehicle, such as a hybrid two-wheeled vehicle, which overcomes the deficiencies of traditional continuous variable transmission (CVT). Further, it is also essential to achieve compactness of the drive system for the hybrid vehicle so that overall compactness and low weight of the vehicle is achieved. Furthermore, it is desirable to provide an improved arrangement for the continuous variable transmission (CVT) which can deliver large amount of torque and power to the rear wheel and additionally provides good initial acceleration.

### BRIEF DESCRIPTION OF THE DRAWINGS

The detailed description is described with reference to the accompanying figures. The same numbers are used throughout the drawings to reference like features and components.
**Fig.1** is a side view of a hybrid two-wheeled vehicle as per one embodiment of the present invention.
**Fig.2** is a side view of a rear portion of the hybrid two-wheeled vehicle illustrating a swing arm of the vehicle as per one embodiment of the present invention.
**Fig.3** is an exploded perspective view of a drive system for the hybrid two-wheeled vehicle illustrating a continuous variable transmission (CVT) for the vehicle, as per one embodiment of the present invention.
**Fig.4** is a perspective view of the swing arm for the hybrid two-wheeled vehicle, as per one embodiment of the present invention.
**Fig.5** is a sectional view of the drive system of the hybrid two-wheeled vehicle along a line II, as per one embodiment of the present invention.

### DETAILED DESCRIPTION

Typically, in a hybrid saddle type vehicle, a transmission system is employed to transfer power from the engine as well as the electric motor to the rear wheel of the vehicle. A type of transmission system commonly used in an existing hybrid vehicle is continuous variable transmission (CVT), which includes a pair of variable diameter pulleys and V belts. However, the conventional arrangement for the continuous variable transmission (CVT) on said hybrid vehicle has various disadvantages and drawbacks. For example, in conversion of a typical hybrid saddle type vehicle to an electric vehicle, the disassembling of an internal combustion engine from the vehicle involves complex steps and further requires more time.

Further, several complexity associated with the traditional arrangement of continuous variable transmission (CVT) in the hybrid saddle type vehicle have posed problems in both its implementation and application on the vehicle. Thus, there exists a need for an improved arrangement for the CVT in the hybrid saddle type vehicle which provides a simple design and additionally requires less time in disassembling the engine from the vehicle when converting said hybrid vehicle to the electric vehicle. Further, there still continues a need to provide a modified arrangement of the continuous variable transmission (CVT) which can facilitates in achieving better transmission efficiency, good drivability, delivers large engine torque and additionally provides an improved initial acceleration.

Further, it is desirable to provide an improved arrangement for said continuous variable transmission (CVT) in the saddle type vehicle, such as a hybrid vehicle, which overcomes the deficiencies of traditional arrangement of the continuous variable transmission (CVT). An object of the invention is to provide an improved design of said continuous variable transmission (CVT) in the hybrid two-wheeled vehicle to provide better and improved initial acceleration at engine low speed for the vehicle.

The present invention is derived from the foregoing problems, and the object of the invention is to provide an improved arrangement for the continuous variable transmission (CVT) in the hybrid vehicle which can efficiently transmit driving power of said internal combustion engine to the rear wheel.

According to the present invention, a hybrid saddle type vehicle comprises a vehicle frame extending along a vehicle longitudinal direction, a swing arm being swingably journaled to the vehicle body frame and adapted to support a rear wheel , an electric motor coupled to the rear wheel and a drive system comprising a continuous variable transmission (CVT) adapted to transmit a power of an internal combustion engine from one side of the swing arm in a widthwise direction of the vehicle to the rear wheel. The continuous variable transmission (CVT) includes a first transmission stage having a first predetermined ratio connected between a first drive pulley and a first driven pulley through a first transmission member. The first transmission member in said first transmission stage of said continuous variable transmission (CVT) is a V-belt wrapped between said first drive pulley and said first driven pulley. Referring to one embodiment of the present invention, said continuous variable transmission (CVT) further includes a second transmission stage coupled to an output side of said first transmission stage. The second transmission stage having a second predetermined ratio connected between a driven shaft and a drive shaft through a second transmission member. In one embodiment, said second transmission member in said second transmission stage of said continuous variable transmission (CVT) is a chain coupled to the driven shaft and the drive shaft. Further, as per one embodiment, said continuous variable transmission (CVT) includes a third transmission stage coupled to an output side of said second transmission stage. In one embodiment, said third transmission stage connected between a second drive pulley and a second driven pulley through a third transmission member. Further, in one embodiment, said continuous variable transmission (CVT) comprises a one-way clutch coupled to a driven sprocket in said second transmission stage. In one embodiment, said one-way clutch provides a unidirectional power transmission between the engine and the rear wheel. As per one embodiment, said third transmission member in said third transmission stage of said continuous variable transmission (CVT) is a V-belt wrapped between the second drive pulley and the second driven pulley. Further, in another embodiment of the present invention, said third transmission member in said third transmission stage of said continuous variable transmission (CVT) is a chain coupled to the second drive pulley and the second driven pulley.

Further, as per one embodiment of the present invention, said swing arm of the vehicle comprises a pair of lateral support portions which surrounds a pivot shaft, a first arm portion extending rearwardly from one lateral support portion of the pair of lateral support portions, to a position along one lateral side of the rear wheel, a second arm portion extending rearwardly from other lateral support portion of the pair of lateral support portions to a position along other lateral side of the rear wheel, at least one cross-member extending between said first arm portion and said second arm portion, and a cross-portion extending in the widthwise direction of the vehicle in order to connect the first arm portion to the second arm portion. Referring to one embodiment of the present invention, in said hybrid two-wheeled vehicle, the engine is packaged between at least of portion of said first arm and at least a portion of said cross-portion of said swing arm of the vehicle through at least one mount member.

In one embodiment, the present invention provides for the improved layout configuration for the continuous variable transmission which comprises of at least three-transmission stages. In one embodiment, said at least three-transmission stages includes a first stage belt drive, a second stage chain drive and a third stage belt and chain drive. Thus, one embodiment of the present invention describes a two-stage chain and belt drive for ratio reduction along with the one-way clutch is arranged on the driven sprocket. Referring to one embodiment, the engine speed adjusts proportionately with the vehicle speed. More specifically, as the vehicle accelerates, the engine speed increases, the continuous variable transmission (CVT) varies the continuous variable transmission (CVT) ratio automatically specific to the vehicle load and engine speed. Thus, the ratio for better acceleration and maximum engine torque is received at the rear wheel of the vehicle.

In one embodiment of the present invention, said improved design for the continuous variable transmission provides better initial acceleration to the vehicle because of the higher torque multiplication for the torque flow path for the electric motor through said at least three transmission stages of the continuous variable transmission (CVT).

The present invention, relates to the hybrid saddle type vehicle, in general, for the continuous variable transmissions (CVT) and, more particularly, to said at least three transmission stages of the continuous variable transmissions (CVT), which provides a compact packaging of said engine in said swing arm of the vehicle and additionally provides simple and easy step of dissembling or assembling of the engine from the vehicle, thereby converting said hybrid two-wheeled vehicle to pure electric vehicle and vice-versa. As per one embodiment of the present invention, said engine with said continous variable transmission (CVT) for the vehicle is coupled to said rear wheel through said third transmission member of said third transmission stage of the continous variable transmission (CVT). In one embodiment, said third transmission member is a belt and in another embodiment, said third transmission member is a chain coupled to said second drive pulley and said second driven pulley. Referring to one embodiment, disconnection of said engine through the removal of said third transmission member from the continous variable transmission (CVT) can simplify the easy disassembling of said engine from the vehicle without involving the complex step of disassembling the rear wheel from the vehicle. Thus, as per one embodiment of the present invention, said third transmission member connecting said engine with the rear wheel of the vehicle provides easy and simple steps involved in conversion of said hybrid saddle type vehicle into an electric vehicle. Moreover, as per one embodiment of the present invention, at least one power unit including the engine is detachably mounted to said swing arm through said at least one mount member being fixedly attached to at least a portion of the swing arm through welding. In another embodiment, when said hybrid saddle type vehicle is converted to said electric vehicle, said at least one mount member can further be utilized for detachably securing said at least one power unit including a battery box on said swing arm through said at least one mount member without involving the requirement of modifying any components on the vehicle. Thus, with an improvement of the continous variable transmission (CVT) for the hybrid two-wheeled vehicle, the conversion of said hybrid saddle type vehicle to the electric vehicle is easy and simple process and additionally doesnot involve an additional space on vehicle for mounting the battery box to the vehicle. As per one embodiment, said third transmission stage in the continous variable transmission (CVT) facilitates in achieving high torque to the rear wheel, improved initial acceleration at engine low speed and additionally provides simplified steps in converting said hybrid saddle type vehicle to a pure electric vehicle without modification of any parts or components on vehicle. As per one embodiment of the present invention, the improved layout configuration is such that it packages the retrofittable power train with a minimum distance centre distance (CD). As per another aspect of the present invention, the ratio of the distance F between the centre axis of the first transmission of the retrofit power train and the distance E between the swing-arm pivot to the rear wheel axis is between 0.25 to 0.75, that is 1/4^{th} to 3/4^{th} when viewed from the top of the vehicle, so as to achieve a layout configuration which gives best performance of the vehicle in terms of engine torque, acceleration, handling behavior for a hybrid saddle type vehicle.

The present invention provides a hybrid saddle type vehicle with improved design for the continous variable transmission (CVT) in which an electric operation (EV operation) in EV mode powered by the electric motor alone is possible by stopping or removing the engine and releasing the clutch through a step of disconnecting the third transmission member of the CVT from the rear wheel, while hybrid operation (HEV operation) in HEV mode powered by the electric motor and the engine is possible by starting the engine and engaging the clutch. In the improved design of the CVT, the centre distance (CD) of the engine is reduced such that the engine is compactly mounted on said swing arm of the vehicle. As per one embodiment, said centre distance (CD) of the engine is the distance from the engine axis to the rear wheel axis.

The present invention relates to the improvement in the layout configuration of the continuous variable transmission (CVT) in the hybrid saddle type vehicle, that is, vehicles in which both an internal combustion engine and one or more electric motors are provided to supply torque to the driving wheels of the vehicle. More particularly, this invention relates to the hybrid saddle type vehicle that provides compact packaging of the engine in said swing arm and additionally involves simple and easy steps in conversion of said hybrid saddle type vehicle to pure electric saddle type vehicle.

Another object of the invention is to provide an improved continuous variable transmission with at least three stages of CVT transmission and hence effectively assist the engine torque, thereby providing an improved initial acceleration and thus ensuring compactness and economy of the vehicle.

Further, as per one embodiment of the present invention, said at least three-transmission stages comprises of a unidirectional rotation of said first transmission member, said second transmission member and said third transmission member of said continous variable transmission.

It is advantageous, as per one embodiment of the present invention, to describe an improved layout configuration of the continuous variable transmission in the hybrid saddle type vehicle, in which an internal combustion engine can be disposed in a compact size, a design freedom is improved, and additionally the steps in conversion of a hybrid saddle type vehicle to an electric vehicle is simplified. Further, an improved layout of the continuous variable transmission with said at least three transmission stages facilitates in delivering maximum engine torque to the rear wheel and hence provides better and improved initial acceleration for the vehicle at engine low speed.

Various other features and advantages of the invention are described in detail below with reference to the accompanying drawings. In the drawings, like reference numbers generally indicate identical, functionally similar, and/or structurally similar elements. The drawing in which an element first appears is indicated by the leftmost digit(s) in the corresponding reference number. With reference to the accompanying drawings, wherein the same reference numerals will be used to identify the same or similar elements throughout the several views. It should be noted that the drawings should be viewed in the direction of orientation of the reference numerals.

It is to be noted that in the ensuing description, the present invention is usable in a saddle type vehicle exemplified in the form of a hybrid two wheeled scooter type vehicle.

Further "front" and "rear", and "left" and "right" referred to in the ensuing description of the illustrated embodiment refer to front and rear, and left and right directions as seen in a state of being seated on a seat of the two-wheeled vehicle. Furthermore, a longitudinal axis refers to a front to rear axis relative to the vehicle, while a lateral axis refers to a side to side, or left to right axis relative to the vehicle. Also, it is to be understood that the phraseology and terminology used herein is for the purpose of description and should not be regarded as limiting.

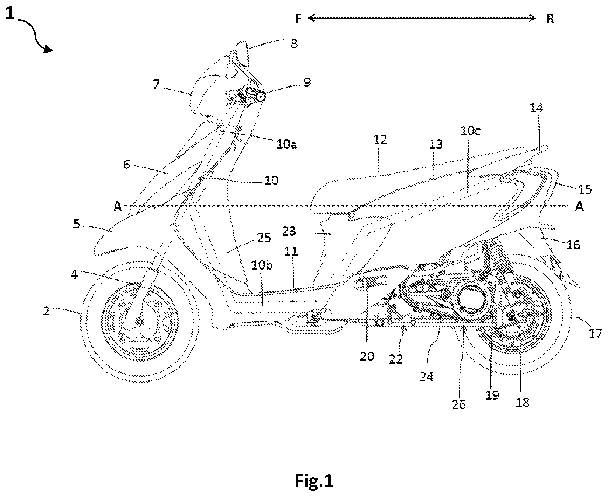

With reference to **FIG.1****,** a description is made of a hybrid two-wheeled vehicle (hereinafter "vehicle") in accordance with one embodiment of the present invention. In one embodiment, said vehicle **(1)** illustrated, has a step-through type frame assembly **(10).** The step-through type frame assembly **(10)** includes a head tube **(10a),** a main tube **(10b)** and a pair of side frames **(10c).** Particularly, the main tube **(10b)** extends downwards from an anterior portion of the head tube **(10a)** and then extends rearwards in an inclined manner. Thus, the frame assembly **(10)** extends from a front portion **(F)** to a rear portion **(R)** of the vehicle **(1).** The hybrid two-wheeled vehicle **(1)** further includes a plurality of body panels for covering the frame assembly **(10)** and is mounted thereto. In one embodiment, said plurality of body panels includes a front panel **(6),** a leg shield **(25),** an under-seat cover **(23),** and a left and a right side panel **(13).** Further, a glove box (not shown) may be mounted to said leg shield **(25).** In a step through space formed between said leg shield **(25)** and said under seat cover **(23),** a floorboard **(11)** is provided. Further, a seat assembly **(12)** is disposed above said under-seat cover **(23),** and is mounted to said pair of side frames **(10c).** A utility box (not shown) is disposed below the seat assembly **(12).** A fuel tank (not shown) is positioned below the utility box. A pillion handle **(14)** is disposed behind said seat assembly **(12).** A rear fender **(16)** for covering at least a portion of a rear wheel **(17)** is positioned below the fuel tank. One or more suspension(s)/shock absorbers **(19)** are provided in a rear portion **(R)** of said vehicle **(1)** for comfortable ride. Further, said vehicle **(1)** comprises of plurality of electrical and electronic components including a headlight **(7),** a taillight **(15),** a transistor controlled ignition (TCI) unit (not shown), a starter motor (not shown) and the like. A touch screen LCD unit (not shown) is provided on a handle bar **(9)** to display various operating modes, power flow pattern and warning signals. Rear view mirrors **(8)** are mounted on the right and left sides of the handle bar **(9).** In one embodiment, said vehicle **(1)** is also provided with hazard lamps (not shown). An internal combustion engine **(24),** hereinafter "engine", is arranged behind said floorboard **(11)** and supported between the pair of side frames. Particularly, said internal combustion engine **(24)** is supported by a swing arm **(22).** The swing arm **(22)** is attached to a lower portion of the main tube **(10b)** by means of a toggle link (not shown). The other end of the swing arm **(22)** holds the rear wheel **(17).** The rear wheel **(17)** and the swing arm **(22)** are connected to the pair of side frames **(10c)** by means of a one or more shock absorbers **(19)** provided on either side of the vehicle **(1).**

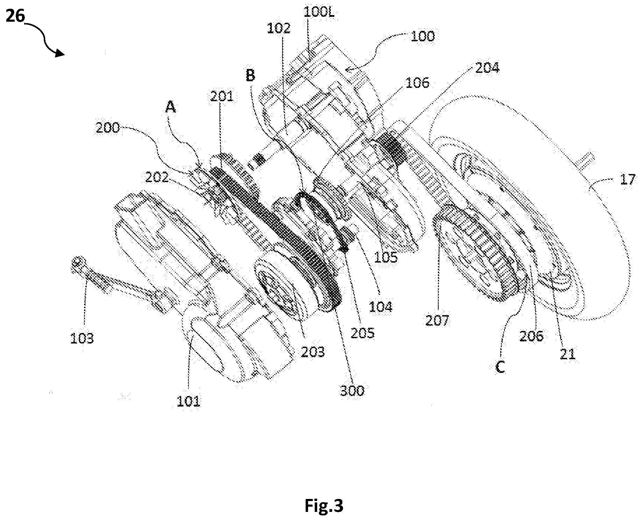

Further in **Fig.1****,** according to the invention, said vehicle **(1)** includes an electric motor **(18)** mounted on a hub of the rear wheel **(17).** In one embodiment, said electric motor **(18)** is powered by a battery (not shown) disposed in a rear portion **(R)** of the vehicle **(1).** A controller (not shown) is also provided to control various vehicle operative modes. The vehicle **(1)** is configured to be propelled either by the engine **(24)** alone or by the electric motor **(18)** alone or by both engine **(24)** and electric motor **(18)** simultaneously. At zero vehicle speed, a rider can select any of the following four operating drive modes with the help of a mode switch. The four operating drive modes of the vehicle **(1)** are: (a) a sole engine mode where engine **(24)** alone powers the vehicle **(1),** (b) a sole motor mode where the electric motor **(18)** alone powers the vehicle **(1),** (c) a hybrid power mode where the engine **(24)** and the electric motor **(18)** together power the hybrid vehicle **(1),** (d) a hybrid economy mode wherein only the engine **(24)** or only the electric motor **(18)** or both power the hybrid vehicle **(1)** depending on the vehicle operating conditions. In other words, the rear wheel **(17)** of the vehicle **(1)** is driven by either the engine **(24)** alone or by the motor **(18)** alone or by both the engine **(24)** and the motor **(18)** simultaneously. Particularly, power from the engine **(24)** to the rear wheel **(17)** is transmitted by a transmission assembly including a drive system **(26)** (shown in **Fig.3**) as per an embodiment of the present invention.

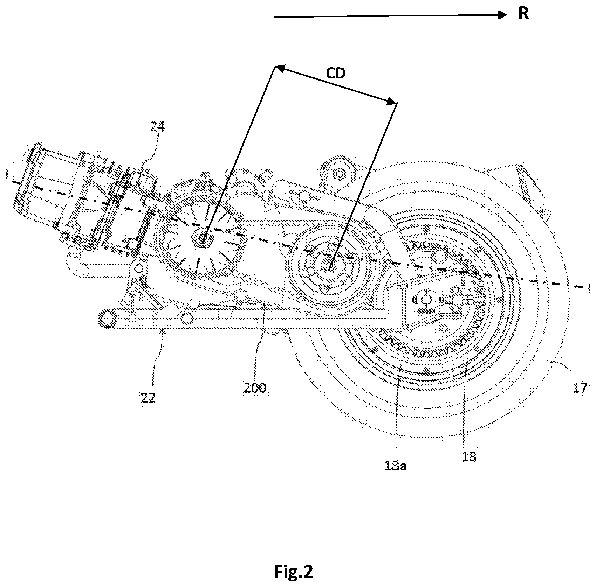

**Fig 2** is a side view of the rear portion **(R)** of the vehicle **(1)** illustrating the packaging of at least one power unit including said engine **(24)** in said swing arm **(22)** of the vehicle **(1)** as per one embodiment of the present invention. In the present invention, said electric motor **(18)** is covered by a motor shroud **(18a)** from at least one side. As per an aspect of the present invention, said motor shroud **(18a)** serves to at least partially encompass/house one or more parts of the drive system **(26)** (shown in **Fig.3**). In one embodiment, said drive system **(26)** (shown in **Fig.3**) for the vehicle **(1)** comprises of said continuous variable transmission **(200)** adapted to transmit a power of the engine **(24)** from one side of the swing arm **(22)** in a widthwise direction of the vehicle **(1)** to the rear wheel **(17).**

**Fig.3** is a perspective view of the engine **(24)** with the continuous variable transmission (CVT) **(200)** with said at least three transmission stages **(A), (B), (C)** of said continous variable transmission (CVT) **(200)** to deliver the power of the engine **(24)** to the electric motor **(18)** to drive the rear wheel **(17).** In one embodiment, the engine **(24)** comprises a crankcase **(100)** and a cylinder (not shown) connected to the crankcase **(100).** The crankcase **(100)** accommodates therein a crankshaft **(102)** and a gear reducer (not shown). The crankcase **(100)** comprises of a left crankcase **(100L)** and a right crankcase (not shown). As per one embodiment, the engine **(24)** (shown in Fig.2) is provided with the continuous variable transmission (CVT) **(200).** In one embodiment, said continuous variable transmission (CVT) **(200)** is coupled to the left crankcase half **(100L)** of the crankcase **(100).** As per one embodiment, said continuous variable transmission (CVT) **(200)** including said first drive pulley **(202)** is adapted to connect to the crankshaft **(102)** of the engine **(24).** In one embodiment of the present invention, the driving force of the crankshaft **(102)** is transmitted to the rear wheel **(17)** through at least three transmission stages **(A), (B), (C)** of the continuous variable transmission (CVT) **(200).** In one embodiment, said engine **(24)** is assembled on the swing arm **(22)** and the moving components of which are enclosed within a cover variator **(101).** In one embodiment, said continuous variable transmission **(200)** includes the first transmission stage **(A)** having said first predetermined ratio connected between the first drive pulley **(202)** and the first driven pulley **(203)** through the first transmission member **(201).** As per one embodiment, said first transmission member **(201)** in said first transmission stage **(A)** of said continuous variable transmission **(200)** is a V-belt wrapped between said first drive pulley **(202)** and said first driven pulley **(203).** Further, said continuous variable transmission **(200)** includes the second transmission stage **(B)** coupled to said output side of said first transmission stage **(A).** The second transmission stage **(B)** is having said second predetermined ratio and connected between the driven shaft **(105)** and the drive shaft **(104)** through the second transmission member **(205).** As per one embodiment, said second transmission member **(205)** in said second transmission stage **(B)** of said continuous variable transmission (CVT) **(200)** is a chain coupled to the driven shaft **(105)** and the drive shaft **(104).** In one embodiment, said continuous variable transmission **(200)** further includes the third transmission stage **(C)** coupled to the output side of said second transmission stage **(B).** The third transmission stage **(C)** is connected between the second drive pulley **(204)** and the second driven pulley **(207)** through the third transmission member **(206).** In one embodiment, said third transmission member **(206)** in said third transmission stage **(C)** of said continuous variable transmission (CVT) **(200)** is said V-belt wrapped between second drive pulley **(204)** and the second driven pulley **(207).** In another embodiment, said third transmission member **(206)** in said third transmission stage **(C)** of said continuous variable transmission **(200)** is the chain coupled to the second drive pulley **(204)** and the second driven pulley **(207).**

Further in **Fig.3****,** as per one embodiment, said continuous variable transmission **(200)** comprises the one-way clutch **(300)** coupled to the driven sprocket **(106)** in said second transmission stage **(B).** The one-way clutch **(300)** provides a unidirectional power transmission between the engine **(24)** and the rear wheel **(17).**

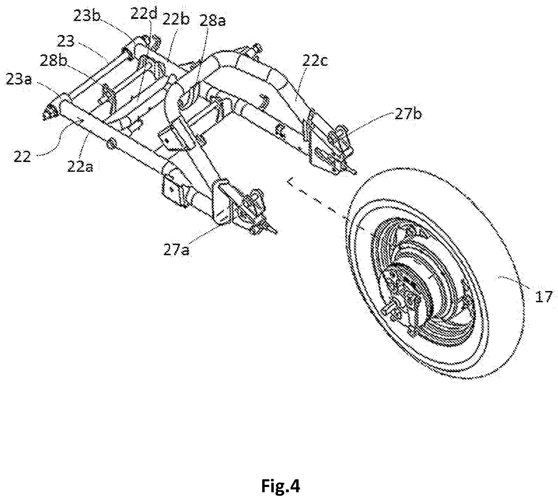

**Fig.4** is a perspective view of the swing arm **(22)** for the vehicle **(1)** as per one embodiment of the present invention. In one embodiment, said swing arm **(22)** is journaled to the frame **(10)** (shown in Fig.1) of the vehicle **(1).** In one embodiment, said swing arm **(22)** is adapted to support the rear wheel **(17).** Referring to one embodiment of the present invention, said swing arm **(22)** comprises said pair of lateral support portions **(23a), (23b)** surrounding the pivot shaft **(23),** the first arm portion **(22a)** extending rearwardly from one lateral support portion **(23a)** of the pair of lateral support portions **(23a), (23b),** to a position along one lateral side of the rear wheel **(17),** a second arm portion **(22b)** extending rearwardly from other lateral support portion **(23a)** of the pair of lateral support portions **(23a), (23b),** to a position along other lateral side of the rear wheel **(17),** said at least one cross-member **(22d)** extending between said first arm portion **(22a)** and said second arm portion **(22b)** and a cross-portion **(22c)** extending in the widthwise direction of the vehicle **(1)** in order to connect the first arm portion **(22a)** to the second arm portion **(22b).**

Further, in one embodiment, said first arm **(22a)** and said second arm **(22b)** is detachably secured to said rear wheel **(17)** through said at least one mounting bracket **(27a), (27b).** In one embodiment, said at least one mount member **(28a), (28b)** is fixedly attached to at least a portion of said cross-portion **(22c)** and at least a portion of one or more cross-member **(22d)** of said swing arm **(22).** As per one embodiment, said at least one mount member **(28a), (28b)** is adapted for detachably securing at least one power source unit **(24)** to said swing arm **(22)** of the vehicle **(1).** In one embodiment, said at least one power source unit is the engine **(24).** In another embodiment, said at least one at least one power source unit is a battery box.

Further in **Fig.4****,** referring to one embodiment, since said engine **(24)** is connected to said rear wheel **(17)** of the vehicle **(1)** through the third transmission member **(206)** of said third transmission stage **(C)** of said continuous variable transmission (CVT) **(200)** (shown in Fig.2), thus said engine **(24)** is easily accommodated between at least a portion of said first arm **(22a)** and at least a portion of said cross-portion **(22c)** of said swing arm **(22)** of the vehicle **(1)** due to the reduced centre distance **(CD)** (shown in Fig 2) of said engine **(24).**

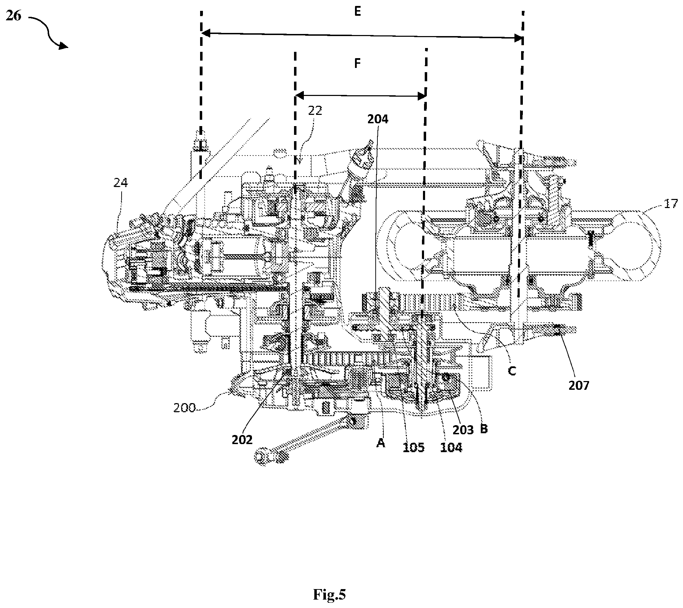

**Fig. 5** is a sectional view of the drive system **(26)** of the vehicle **(1)** along line **I-I** (i**n** **Fig.2****)** as per one embodiment of the present invention. In one embodiment, the vehicle **(1)** comprises, the swing arm **(22)** being swingably journaled to the engine **(24),** the electric motor **(18)** coupled to the rear wheel **(17)** and the drive system **(26)** for transmitting power from the engine **(24)** to the rear wheel **(17)**.In one embodiment, the drive system **(26)** comprises said continous variable transmission **(200)** adapted to transmit a power of the engine **(24)** from one side of the swing arm **(22)** in a widthwise direction of the vehicle **(1)** to the rear wheel **(21).**

Further in **Fig.5****,** as per embodiment, said continuous variable transmission **(200)** includes said at least three transmission stages **(A), (B), (C)** of said continuous variable transmission **(200)** for facilitating large torque transmission from the engine **(24)** to the rear wheel **(17).** As per one embodiment, said first transmission stage **(A)** of said continuous variable transmission **(200)** comprises said V-belt wrapped between said first drive pulley **(202)** and said first driven pulley **(203).** The second transmission stage **(B)** comprises said chain coupled to the driven shaft **(105)** and the drive shaft **(104).** In one embodiment, said third transmission stage **(C)** of continuous variable transmission comprises said V-belt wrapped between second drive pulley **(204)** and the second driven pulley **(207).** In another embodiment, said third transmission stage **(C)** of said continuous variable transmission **(200)** comprises the chain coupled to the second drive pulley **(204)** and the second driven pulley **(207).** Furthermore, the distance F between the axis of the 1^{st} transmission of the power train as between said first drive pulley **(202)** and said first driven pulley **(203)** is illustrated as F and the distance between an axis of the swing arm (22) and an rear wheel axis is depicted as E.

Advantageously, as per one embodiment of the present invention, said at least three transmission stages of said continuous variable transmission (CVT) of the vehicle drive system delivers maximum engine torque to the rear wheel and additionally provides an improved initial acceleration for the vehicle at engine low speed. Further, as per one embodiment, an improved arrangement for the continuous variable transmission in the hybrid saddle type vehicle provides compact and simplified assembling of said at least one power source unit including said engine and battery on said vehicle

## Claims

1. A saddle type vehicle (1), said saddle type vehicle (1) comprising:
a vehicle frame (10), said vehicle frame (10) extending along a vehicle longitudinal direction (AA);
a swing arm (22), said a swing arm (22) being journaled to an internal combustion engine and to said vehicle frame (10) and adapted to support at least one rear wheel (17);
a drive system (26), said drive system (26) comprising:
a continuously variable transmission (200) adapted to transmit a power of said internal combustion engine (24) from one side of said swing arm (22) in a widthwise direction of said vehicle (1) to said rear wheel (17), said continuously variable transmission (200) comprising
a first transmission stage (A), having a first predetermined ratio, comprises a first drive pulley (202) and a first driven pulley (203) connected through a first transmission member (201);
a second transmission stage (B) coupled to an output side of said first transmission stage (A);
a third transmission stage (C) of said continuously variable transmission (200) coupled to an output side of said second transmission stage (B);
**characterized in that**, an electric motor (18) is coupled to said at least one rear wheel (17), and
said second transmission stage (B), having a second predetermined ratio, comprises a driven shaft (105), a drive shaft (104), a driven sprocket (106), and a second transmission member (205), wherein said second transmission member (205) connects said driven shaft (105) and said drive shaft (104),
said third transmission stage (C) comprises a second drive pulley (204), a second driven pulley (207), and a third transmission member (206), wherein said third transmission member (206) connects said second drive pulley (204) and said second driven pulley (207), and
said continuously variable transmission (200) further comprises a one-way clutch (300) coupled to said driven sprocket (106) in said second transmission stage (B), wherein said one way clutch (300) provides an unidirectional power transmission between said internal combustion engine (24) and said rear wheel (17),
and wherein, said one-way clutch (300) being configured to disconnect said third transmission stage (C) from said rear wheel (17) to enable an electric operation of the saddle type vehicle (1) powered by said electric motor (18) alone and stopping said engine,
and engage said third transmission stage (C) from said rear wheel (17) to enable a hybrid operation of said saddle type vehicle (1) and powered by electric motor (18) and internal combustion engine (24) by starting said engine and engaging the said one-way clutch (300).

2. The saddle type vehicle (1) as claimed in claim 1, wherein said first transmission member (201) in said first transmission stage (A) of said continuously variable transmission (200) being a V-belt wrapped between said first drive pulley (202) and said first driven pulley (203).

3. The saddle type vehicle (1) as claimed in claim 1, wherein said second transmission member (205) in said second transmission stage (B) of said continuously variable transmission being a chain coupled to said driven shaft (105) and said drive shaft (104).

4. The saddle type vehicle (1) as claimed in claim 1, wherein said third transmission member (206) in said third transmission stage (C) of said continuously variable transmission (200) being a toothed belt wrapped between second drive pulley (204) and said second driven pulley (207).

5. The saddle type vehicle (1) as claimed in claim 1, wherein said third transmission member (206) in said third transmission stage (C) of said continuously variable transmission (200) being a chain coupled to said second drive pulley (204) and said second driven pulley (207).

6. The saddle type vehicle (1) as claimed in claim 1, wherein said swing arm (22) comprises:
a pair of lateral support portions (23a), (23b) surrounding a pivot shaft (23),
a first arm portion (22a) extending rearwardly from one lateral support portion (23a) of said pair of lateral support portions (23a), (23b), to a position along one lateral side of said rear wheel (17),
a second arm portion (22b) extending rearwardly from other lateral support portion (23a) of said pair of lateral support portions (23a), (23b), to a position along other lateral side of said rear wheel (17),
at least one cross-member (22d) extending between said first arm portion (22a) and said second arm portion (22b), and
a cross-portion (22c) extending in said widthwise direction of said vehicle (1) in order to connect said first arm portion (22a) to said second arm portion (22b).

7. The saddle type vehicle (1) as claimed in claim 6, wherein said internal combustion engine (24) being packaged between at least a portion of said first arm portion (22a) and at least a portion of said cross-portion (22c) of said swing arm (22) of said vehicle (1).

8. The saddle type vehicle (1) as claimed in claim 1, wherein said continuously variable transmission (200) includes a ratio of a distance F defined between said centre axis of said first transmission stage (A) of said retrofit power train and said distance E defined between a swing-arm pivot to a rear wheel axis being between 0.25 to 0.75, that is, 1/4^{th} to 3/4^{th} when viewed from said top of said vehicle.

## Patentansprüche

1. Sattelfahrzeug (1), wobei das sattelförmige Fahrzeug (1) aufweist:
einen Fahrzeugrahmen (10), wobei sich der Fahrzeugrahmen (10) entlang einer Fahrzeuglängsrichtung (AA) erstreckt;
einen Schwingarm (22), wobei der Schwingarm (22) an einem Verbrennungsmotor und an dem Fahrzeugrahmen (10) schwenkbar angebracht ist und dazu angepasst ist, zumindest ein Hinterrad (17) zu tragen;
ein Antriebssystem (26), wobei das Antriebssystem (26) aufweist:
ein stufenlos verstellbares Getriebe (200) zum Übertragen einer Antriebskraft des Verbrennungsmotors (24) von einer Seite des Schwingarms (22) in einer breitenbezogenen Richtung des Fahrzeugs (1) auf das Hinterrad (17), wobei das stufenlos verstellbare Getriebe (200) aufweist:
eine erste Getriebestufe (A) mit einem ersten vorbestimmten Übersetzungsverhältnis, die eine erste Antriebscheibe (202) und eine erste angetriebene Scheibe (203) aufweist, die über ein erstes Übertragungselement (201) verbunden sind;
eine zweite Getriebestufe (B), die an eine Ausgangsseite der ersten Getriebestufe (A) gekoppelt ist;
eine dritte Getriebestufe (C) des stufenlosen Getriebes (200), die an eine Ausgangsseite der zweiten Getriebestufe (B) gekoppelt ist;
**dadurch gekennzeichnet, dass**
ein Elektromotor (18) mit dem zumindest einen Hinterrad (17) gekoppelt ist, und
die zweite Getriebestufe (B), mit einem zweiten vorbestimmten Übersetzungsverhältnis, eine angetriebene Welle (105), eine Antriebswelle (104), ein angetriebenes Kettenrad (106) und ein zweites Übertragungselement (205) aufweist, wobei das zweite Übertragungselement (205) die angetriebene Welle (105) und die Antriebswelle (104) verbindet,
die dritte Getriebestufe (C) eine zweite Antriebscheibe (204), eine zweite angetriebene Scheibe (207) und ein drittes Übertragungselement (206) aufweist, wobei das dritte Übertragungselement (206) die zweite Antriebscheibe (204) und die zweite angetriebene Scheibe (207) verbindet, und
das stufenlose Getriebe (200) ferner eine Einwegkupplung (300) aufweist, die mit dem angetriebenen Kettenrad (106) in der zweiten Getriebestufe (B) gekoppelt ist, wobei die Einwegkupplung (300) eine unidirektionale Kraftübertragung zwischen dem Verbrennungsmotor (24) und dem Hinterrad (17) liefert,
und wobei die Einwegkupplung (300) dazu eingerichtet ist, die dritte Getriebestufe (C) von dem Hinterrad (17) zu trennen, um einen elektrischen Betrieb des Sattelfahrzeugs (1) zu ermöglichen, der allein durch den Elektromotor (18) angetrieben wird, bei Abstellen des Motors, und die dritte Getriebestufe (C) von dem Hinterrad (17) einzukuppeln, um einen Hybridbetrieb des Sattelfahrzeugs (1) zu ermöglichen, der durch den Elektromotor (18) und den Verbrennungsmotor (24) bei Starten des Motors und Einkuppeln der Einwegkupplung (300) angetrieben wird.

2. Sattelfahrzeug (1) nach Anspruch 1, wobei das erste Übertragungselement (201) in der ersten Übertragungsstufe (A) des stufenlosen Getriebes (200) ein Keilriemen ist, der zwischen der ersten Antriebscheibe (202) und der ersten angetriebenen Scheibe (203) geschlungen ist.

3. Sattelfahrzeug (1) nach Anspruch 1, wobei das zweite Übertragungselement (205) in der zweiten Übertragungsstufe (B) des stufenlosen Getriebes eine Kette ist, die mit der angetriebenen Welle (105) und der Antriebswelle (104) gekoppelt ist.

4. Sattelfahrzeug (1) nach Anspruch 1, wobei das dritte Übertragungselement (206) in der dritten Getriebestufe (C) des stufenlosen Getriebes (200) ein Zahnriemen ist, der zwischen der zweiten Antriebsscheibe (204) und der zweiten angetriebenen Scheibe (207) geschlungen ist.

5. Sattelfahrzeug (1) nach Anspruch 1, wobei das dritte Übertragungselement (206) in der dritten Übertragungsstufe (C) des stufenlosen Getriebes (200) eine Kette ist, die mit der zweiten Antriebscheibe (204) und der zweiten angetriebenen Scheibe (207) gekoppelt ist.

6. Sattelfahrzeug (1) nach Anspruch 1, wobei der Schwenkarm (22) aufweist:
ein Paar seitlicher Trägerbereiche (23a), (23b), die eine Drehachse (23) umgeben,
einen ersten Armbereich (22a), der sich nach hinten von einem seitlichen Trägerbereich (23a) der beiden seitlichen Trägerbereiche (23a), (23b) zu einer Position entlang einer Seite des Hinterrades (17) erstreckt,
einen zweiten Armbereich (22b), der sich nach hinten von dem anderen seitlichen Trägerbereich (23a) der beiden seitlichen Trägerbereiche (23a), (23b) zu einer Position entlang der anderen seitlichen Seite des Hinterrades (17) erstreckt,
zumindest ein Querelement (22d), das zwischen dem ersten Armbereich (22a) und dem zweiten Armbereich (22b) verläuft, und
einen Querteil (22c), der sich zum Verbinden des ersten Armbereichs (22a) mit dem zweiten Armbereich (22b) in der breitenbezogenen Richtung des Fahrzeugs (1) erstreckt.

7. Sattelfahrzeug (1) nach Anspruch 6, wobei der Verbrennungsmotor (24) zwischen zumindest einem Teil des ersten Armbereichs (22a) und zumindest einem Teil des Querteils (22c) des Schwingarms (22) des Fahrzeugs (1) untergebracht ist.

8. Sattelfahrzeug (1) nach Anspruch 1, wobei das stufenlose Getriebe (200) ein Verhältnis eines Abstands F, der zwischen der Mittelachse der ersten Getriebestufe (A) des umgerüsteten Antriebsstrangs definiert ist, und dem Abstand E, der zwischen einem Schwingarm-Drehpunkt und einer Hinterradachse definiert ist, aufweist, das zwischen 0,25 und 0,75 liegt, d.h. 1/4 bis 3/4 bei Betrachtung von der Oberseite des Fahrzeugs.

## Revendications

1. Véhicule de type selle (1), ledit véhicule de type selle (1) comprenant :
un châssis de véhicule (10), ledit châssis de véhicule (10) s'étendant le long d'une direction longitudinale du véhicule (AA) ;
un bras pivotant (22), ledit bras pivotant (22) étant tourillonnant sur un moteur à combustion interne et sur ledit châssis de véhicule (10) et adapté pour supporter au moins une roue arrière (17) ;
un système d'entraînement (26), ledit système d'entraînement (26) comprenant :
une transmission à variation continue (200) adaptée pour transmettre une puissance dudit moteur à combustion interne (24) d'un côté dudit bras pivotant (22) dans le sens de la largeur dudit véhicule (1) à ladite roue arrière (17), ladite transmission à variation continue (200) comprenant
un premier étage de transmission (A), ayant un premier rapport prédéterminé, comportant une première poulie motrice (202) et une première poulie entraînée (203) reliées par un premier organe de transmission (201) ;
un deuxième étage de transmission (B) couplé à un côté de sortie dudit premier étage de transmission (A) ;
un troisième étage de transmission (C) de ladite transmission à variation continue (200) couplé à un côté de sortie dudit deuxième étage de transmission (B) ;
**caractérisé en ce que**
un moteur électrique (18) est couplé à ladite au moins une roue arrière (17), et
ledit deuxième étage de transmission (B), ayant un deuxième rapport prédéterminé, comporte un arbre entraîné (105), un arbre d'entraînement (104), un pignon entraîné (106), et un deuxième élément de transmission (205), ledit deuxième élément de transmission (205) reliant ledit arbre entraîné (105) et ledit arbre d'entraînement (104),
ledit troisième étage de transmission (C) comporte une deuxième poulie motrice (204), une deuxième poulie entraînée (207) et un troisième élément de transmission (206), ledit troisième élément de transmission (206) reliant ladite deuxième poulie motrice (204) et ladite deuxième poulie entraînée (207), et
ladite transmission à variation continue (200) comporte en outre un embrayage unidirectionnel (300) couplé à ladite roue dentée entraînée (106) dans ledit deuxième étage de transmission (B), ledit embrayage unidirectionnel (300) fournissant une transmission de puissance unidirectionnelle entre ledit moteur à combustion interne (24) et ladite roue arrière (17),
et, ledit embrayage unidirectionnel (300) étant configuré pour déconnecter ledit troisième étage de transmission (C) de ladite roue arrière (17) afin de permettre un fonctionnement électrique du véhicule de type selle (1) alimenté par ledit moteur électrique (18) seulement et d'arrêter ledit moteur, et d'engager ledit troisième étage de transmission (C) de ladite roue arrière (17) afin de permettre un fonctionnement hybride dudit véhicule de type selle (1) et alimenté par le moteur électrique (18) et le moteur à combustion interne (24) en démarrant ledit moteur et en engageant ledit embrayage unidirectionnel (300).

2. Véhicule de type selle (1) selon la revendication 1, dans lequel ledit premier organe de transmission (201) dans ledit premier étage de transmission (A) de ladite transmission à variation continue (200) est une courroie trapézoïdale enroulée entre ladite première poulie motrice (202) et ladite première poulie entraînée (203).

3. Véhicule de type selle (1) selon la revendication 1, dans lequel le deuxième élément de transmission (205) dans le deuxième étage de transmission (B) de la transmission à variation continue est une chaîne couplée à l'arbre entraîné (105) et à l'arbre d'entraînement (104).

4. Véhicule de type selle (1) selon la revendication 1, dans lequel ledit troisième élément de transmission (206) dans ledit troisième étage de transmission (C) de ladite transmission à variation continue (200) est une courroie crantée enroulée entre la deuxième poulie d'entraînement (204) et ladite deuxième poulie entraînée (207).

5. Véhicule de type selle (1) selon la revendication 1, dans lequel le troisième élément de transmission (206) dans le troisième étage de transmission (C) de la transmission à variation continue (200) est une chaîne couplée à la deuxième poulie motrice (204) et à la deuxième poulie entraînée (207).

6. Véhicule de type selle (1) selon la revendication 1, dans lequel ledit bras pivotant (22) comporte :
une paire de supports latéraux (23a), (23b) entourant un arbre pivot (23), une première partie de bras (22a) s'étendant vers l'arrière à partir d'un support latéral (23a) de ladite paire de supports latéraux (23a), (23b), jusqu'à une position le long d'un côté latéral de ladite roue arrière (17),
une deuxième partie de bras (22b) s'étendant vers l'arrière depuis l'autre partie de support latéral (23a) de ladite paire de parties de support latéral (23a), (23b), jusqu'à une position le long de l'autre côté latéral de ladite roue arrière (17),
au moins une traverse (22d) s'étendant entre ladite première partie de bras (22a) et ladite deuxième partie de bras (22b), et
une partie transversale (22c) s'étendant dans ladite direction de la largeur dudit véhicule (1) afin de relier ladite première partie de bras (22a) à ladite deuxième partie de bras (22b).

7. Véhicule de type selle (1) selon la revendication 6, dans lequel ledit moteur à combustion interne (24) est emballé entre au moins une partie de ladite première partie de bras (22a) et au moins une partie de ladite partie transversale (22c) dudit bras pivotant (22) dudit véhicule (1).

8. Véhicule de type selle (1) selon la revendication 1, dans lequel ladite transmission à variation continue (200) inclut un rapport entre la distance F définie entre l'axe central du premier étage de transmission (A) de la chaîne cinématique modifiée et la distance E définie entre le pivot d'un bras pivotant et l'axe d'une roue arrière, étant compris entre 0,25 et 0,75, c'est-à-dire entre 1/4 et 3/4, vu de la partie supérieure du véhicule.
